# FASCICULE DE BREVET EUROPEEN

(11) **EP 2 528 764 B1**
(45) Date de publication et mention de la délivrance du brevet: **12.02.2014**
(21) Numéro de dépôt: 10810788.9
(22) Date de dépôt: 23.12.2010
(51) Int. Cl.: B60K 23/08, B60W 10/06, B60W 10/08, B60K 6/52, B60K 6/48, B60K 17/34

(54) **PROCEDE DE REPARTITION DE COUPLE ENTRE LE TRAIN AVANT ET LE TRAIN ARRIERE D'UN VEHICULE HYBRIDE**
VERFAHREN ZUR DREHMOMENTVERTEILUNG ZWISCHEN DEM FRONT- UND HECKTEIL EINES HYBRIDFAHRZEUGES
METHOD FOR DISTRIBUTING TORQUE BETWEEN THE FRONT END AND THE REAR END OF A HYBRID VEHICLE

(30) Priorité: 28.01.2010 FR 1050577
(43) Date de publication de la demande: 05.12.2012
(73) Titulaire: Peugeot Citroën Automobiles SA, 78140 Vélizy-Villacoublay (FR)
(72) Inventeur: HABBANI, Ridouane, F-92110 Clichy (FR)
(74) Mandataire: Rosenberg, Muriel Sylvie
(86) Numéro de dépôt international: PCT/FR2010/052901
(87) Numéro de publication internationale: WO 2011/092391

(56) Documents cités:
- EP-A2- 1 356 974
- US-A1- 2004 070 270

## Description

L'invention concerne un procédé de répartition de couple entre le train avant et le train arrière d'un véhicule hybride. L'invention a notamment pour but d'optimiser la répartition de couple entre ces trains tout en limitant la consommation électrique du véhicule.

L'invention trouve une application particulièrement avantageuse dans le domaine des véhicules hybrides comportant un train avant et un train arrière tractés mécaniquement indépendamment l'un de l'autre. US 2004/0070270 A1 divulgue un procédé de répartition de couple conformément au préambule de la revendication 1.

On connaît des véhicules hybrides comportant un moteur thermique assurant la traction du train avant, ce moteur étant associé mécaniquement à une machine électrique avant. Cette machine électrique de type alterno/démarreur permet notamment de recharger les batteries du véhicule et démarrer le moteur thermique. Dans certaines situations de vie, cette machine peut même participer à la traction du véhicule.

Ces véhicules comportent également une machine électrique assurant la traction du train arrière via un réducteur et un dispositif d'accouplement par exemple de type crabot. Par opposition aux véhicules 4x4 traditionnels, la traction du train avant et la traction du train arrière sont indépendantes mécaniquement l'une de l'autre.

La machine électrique avant et la machine électrique arrière sont reliées à une batterie haute tension par l'intermédiaire d'un réseau électrique. Cette batterie haute tension est en relation avec un réseau de bord basse tension par l'intermédiaire d'un convertisseur continu/continu.

Un système de régulation de freinage est généralement installé sur les roues du véhicule, ce système permettant d'éviter le blocage des roues et le cas échéant de rétablir une trajectoire du véhicule.

Lors d'une phase de vie normale du véhicule, un couple de consigne global est calculé en fonction notamment de l'enfoncement de la pédale d'accélérateur et de la vitesse du véhicule. Ce couple de consigne global est ensuite transformé en un couple de consigne avant et un couple de consigne arrière par le calculateur moteur.

Une répartition sensiblement homogène du couple demandé entre le train avant et le train arrière (mode 4x4) est particulièrement intéressante lors de l'activation du système de freinage puisqu'elle permet d'adapter rapidement les couples appliqués sur les roues pour rétablir la trajectoire du véhicule. Toutefois, ce mode de fonctionnement présente l'inconvénient de puiser de l'énergie dans la batterie haute tension à laquelle est connectée la machine assurant la traction du train arrière.

Par ailleurs, le mode de conduite dans lequel tout le couple est transmis par le train avant présente l'intérêt de limiter la consommation électrique du véhicule. Toutefois, un tel mode de conduite n'est pas bien adapté pour rétablir une trajectoire du véhicule en cas d'activation du système de régulation de freinage puisque aucun couple sur le train arrière n'est appliqué.

L'invention part de cette constatation pour proposer un procédé permettant d'exploiter les quatre roues motrices du véhicule hybride sans puiser de l'énergie inutilement dans la batterie haute tension.

A cet effet, le groupe motopropulseur transite (lorsque l'adhérence route devient meilleure et que le système de régulation de freinage n'est pas activé) d'une répartition de couple optimale en termes de motricité 4X4 (par exemple environ 60% à l'avant et 40% à l'arrière) vers une répartition de couple dégradée en termes de motricité permettant de limiter l'énergie puisée dans la batterie.

L'invention concerne donc un procédé de répartition de couple entre le train avant et le train arrière d'un véhicule hybride comprenant :
- un moteur thermique destiné à assurer la traction d'un des trains du véhicule,
- une machine électrique arrière destinée à assurer la traction de l'autre train du véhicule,
   caractérisé en ce que le couple demandé par le conducteur étant réparti initialement suivant une première répartition de couple entre le train avant et le train arrière,
- plus la distance parcourue sans activer une fonction de régulation de freinage augmente, plus on modifie la répartition du couple demandé pour aller de la première répartition de couple vers une deuxième répartition de couple dans laquelle le train associé au moteur thermique transmet plus de couple que dans la première répartition.

Selon une mise en oeuvre, la première répartition de couple est une répartition optimale en termes de motricité observable lorsque la distance parcourue sans activation d'une fonction de régulation de freinage est nulle.

Selon une mise en oeuvre, la répartition de couple optimale :
- le couple appliqué sur le train associé au moteur thermique est compris entre 40 et 70% du couple demandé, de préférence 60%, et
- le couple appliqué sur l'autre train est compris entre 10 et 60% du couple demandé, de préférence 40%,
- la somme en pourcents de ces portions du couple global (Cglob) valant 100%.

Selon une mise en oeuvre, la deuxième répartition de couple est une répartition dite « dégradée » en termes de motricité dans laquelle l'ensemble du couple demandé est transmis par le train associé au moteur thermique.

Selon une mise en oeuvre, dans un exemple la répartition de couple « dégradée » est atteinte lorsque le véhicule a parcouru 1500 mètres.

Selon une mise en oeuvre, on passe progressivement de la première répartition à la deuxième répartition, en utilisant une cartographie établissant une correspondance entre la répartition de couple à adopter en fonction de la distance parcourue sans activation du système de freinage.

Selon une mise en oeuvre, dès que on détecte le déclenchement d'une fonction de régulation de freinage, on repasse à la première répartition de couple.

Selon une mise en oeuvre, le passage de la répartition de couple en cours à la première répartition de couple est effectué suivant un gradient paramétrable.

Selon une mise en oeuvre, le gradient vaut par exemple 20 pourcents par seconde.

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique d'un véhicule hybride mettant en oeuvre le procédé selon l'invention ;
Figure 2 : un diagramme temporel montrant l'évolution de la répartition du couple entre le train avant et le train arrière du véhicule de la Figure 1 en fonction de la distance parcourue sans activation du système de régulation de freinage lors de la mise en oeuvre du procédé selon l'invention.

Les éléments identiques conservent les mêmes références d'une Figure à l'autre.

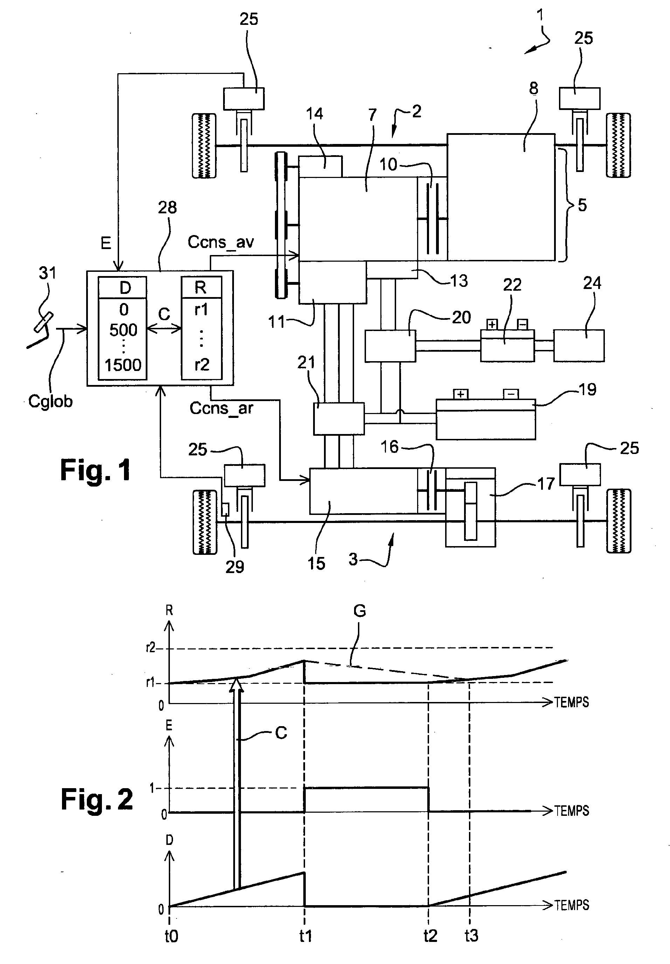

La Figure 1 montre un véhicule 1 hybride mettant en oeuvre le procédé selon l'invention comportant un train avant 2 et un train arrière 3 indépendants mécaniquement l'un de l'autre.

Un groupe moto-propulseur 5 classique assure la traction du train avant 2 du véhicule. Plus précisément, ce groupe 5 comporte un moteur 7 thermique en relation avec une boîte 8 de vitesses manuelle pilotée (BVMP) par l'intermédiaire d'un embrayage 10 classique par exemple un embrayage à garniture sec ou humide. Cette boîte 8 de vitesses est reliée au train avant 2 par l'intermédiaire d'une descente de pont (non représentée). En variante, le groupe 5 moto-propulseur pourrait comporter une boîte 8 de vitesses automatique.

Par ailleurs, une machine 11 électrique est associée mécaniquement au moteur 7 thermique. Cette machine 11 assure la recharge des batteries du véhicule, le démarrage du moteur 7 et s'il y a lieu la traction du train avant 2 en fournissant du couple (mode boost).

Un starter 13 est utilisé pour démarrer le moteur 7 en cas de températures très basses dans le cas où la machine avant 11 n'est pas capable d'assurer cette fonction. Si besoin, un système 14 de climatisation est relié mécaniquement au moteur 7 et à la machine avant 11.

En outre, une machine 15 électrique assure la traction du train arrière 3 du véhicule. A cet effet, la machine 15 est reliée au train arrière 3 par l'intermédiaire d'un embrayage 16 et d'un ensemble 17 de démultiplication. Cet embrayage 16 prend par exemple la forme d'un crabot, tandis que l'ensemble 17 de démultiplication est à rapport unique, même s'il pourrait en variante présenter plusieurs rapports.

Les deux machines 11 et 15 sont reliées entre elles par l'intermédiaire d'un réseau électrique. Plus précisément, les machines 11 et 15 sont reliées à une batterie 19 haute tension par l'intermédiaire d'un onduleur 21 capable de hacher la tension continue de la batterie 19 pour alimenter les machines 11 et 15 électriques lorsque ces dernières fonctionnent en mode moteur. Lorsque ces machines électriques 11 et 15 fonctionnent en mode générateur pour recharger la batterie 19, l'onduleur 21 est capable de transformer la tension alternative produite par les machines 11 et 15 en tension continue appliquée sur les bornes de la batterie 19.

La batterie 19 est connectée à un convertisseur 20 continu/continu qui transforme la tension continue haute tension de la batterie 19 en une tension acceptable par le starter 13 et par une batterie 22 basse tension connectée au réseau 24 de bord du véhicule.

De préférence, le véhicule 1 est équipé d'un système 25 de régulation de freinage classique de type ESP ou ABS permettant de gérer les efforts de freinage en cas de freinage d'urgence, afin d'assurer le contrôle de la trajectoire du véhicule et/ou d'éviter le blocage des roues.

Un calculateur 28 commande les différents organes du véhicule pour effectuer notamment la répartition du couple Cglob demandé par le conducteur entre le train avant 2 (couple Ccns_av) et le train arrière 3 (couple Ccns_ar). Le couple demandé Cglob par le conducteur est calculé notamment en fonction de l'enfoncement de la pédale 31 d'accélérateur et de la vitesse du véhicule 1.

La Figure 2 montre en fonction du temps l'évolution de la répartition R du couple Cglob entre le train avant 2 et le train arrière 3, l'évolution de la distance D parcourue sans intervention du système 25 de freinage, et l'évolution de l'état E du système 25 de freinage (à l'état 0 le système 25 n'est pas activé ; tandis qu'à l'état 1 le système 25 est activé).

On note que le système 25 de freinage envoie la donnée E relative à son état d'activation vers le calculateur 28, tandis que la distance D parcourue est retournée au calculateur 28 par un capteur 29 de distance associé à une des roues du véhicule.

A l'instant t0, la distance D parcourue sans activation du système 25 de régulation est nulle et le couple global Cglob est réparti sensiblement de manière homogène entre le train avant 2 et le train arrière 3 du véhicule suivant une répartition r1 de couple. Cette répartition r1 est dite « optimale », car elle est optimale en termes de motricité. Dans un exemple, dans la répartition de couple optimale r1, 60% du couple global Cglob est appliqué sur le train avant 2 du véhicule, et 40% du couple global Cglob est appliqué sur le train arrière 3 du véhicule.

Entre les instants t0 et t1, le système 25 de freinage est à l'état E=0 et n'est donc pas activé. On s'aperçoit que, sur cette période, plus la distance D parcourue sans activation du système de freinage augmente, plus la répartition R de couple évolue progressivement vers une répartition de couple r2 de dite « dégradée » dans laquelle plus de couple est transmis sur le train avant 2 que dans la répartition r1 de couple initial. De préférence, dans la répartition dégradée r2, l'ensemble du couple Cglob est transmis par le train avant 2 du véhicule.

La correspondance entre la répartition R de couple avant/arrière à adopter et la distance D parcourue sans activation du système 25 de contrôle de freinage est effectuée à l'aide d'une cartographie C intégrée au calculateur 28. Dans un exemple, aux distances [0, 500, 1000 et 1500] mètres correspondent les pourcentages du couple global Cglob appliqués sur le train avant 2 suivants [60, 70, 100, 100] pourcents. Le pourcentage du couple Cglob appliqué sur le train arrière 3 vaut bien entendu 100% moins le pourcentage appliqué sur le train avant 2. Autrement dit, au démarrage (D=0m), on applique une répartition de couple 60% à l'avant et 40% à l'arrière, puis lorsque le véhicule a parcouru D=500m sans activation du système 25 de contrôle on applique une répartition 70% à l'avant et 30% à l'arrière et ainsi de suite jusqu'à D=1500m pour laquelle l'ensemble du couple Cglob est appliqué à l'avant et aucun couple à l'arrière.

A l'instant t1, le système 25 de régulation de freinage est activé, on passe alors de la répartition R en cours à la répartition optimale r1 pour pouvoir compenser la trajectoire du véhicule et on initialise la distance D parcourue sans activation du système de freinage à 0. De préférence, on passe progressivement de la répartition R en cours à la répartition optimale r1 suivant un gradient G de couple paramétrable exprimé en pourcents par seconde (cf courbe en traits discontinus). Dans un exemple, ce gradient G vaut 20%/s.

A l'instant t2, le système 25 de régulation est désactivé, de sorte que la répartition R de couple repasse progressivement de la répartition optimale r1 vers la répartition dégradée r2. Dans le cas où la répartition R est passée précédemment entre t1 et t2 de la répartition dégradée r2 à la répartition optimale r1 suivant un gradient G, il est possible d'attendre que la répartition R atteigne la répartition optimale r1 à l'instant t3 avant de repasser progressivement vers la répartition r2 dégradée (voir courbe en traits discontinus).

Dans la cas où le système 25 de régulation de freinage a été mis « hors tension » par le conducteur ou le calculateur 28, c'est-à-dire lorsque le système 25 ne réalise plus sa fonction principale de contrôle de freinage dans les situations de freinage critiques, on maintient la distance D parcourue à la distance nulle car sinon le véhicule présenterait une répartition de couple « dégradée » r2 dès que le système 25 de régulation serait remis « sous tension ».

L'état « hors tension » est donné par opposition à l'état « sous tension » que présente le système 25 de régulation entre les instants t0 et t2 dans lequel il assure sa fonction de contrôle de freinage dans les situations de freinage critique.

Le maintien de la distance D parcourue sans activation du couple à la distance nulle est aussi effectué lorsque le mode de conduite choisi par le conducteur est autre que le mode 4x4, comme par exemple le mode « thermique » dans lequel toute le couple est transmis par le train avant 2, ou le mode « tout électrique » dans lequel tout le couple est transmis par le train arrière 3 du véhicule.

## Revendications

1. Procédé de répartition de couple entre le train avant (2) et le train arrière (3) d'un véhicule (1) hybride comprenant :
- un moteur (7) thermique destiné à assurer la traction d'un des trains (2) du véhicule,
- une machine (15) électrique arrière destinée à assurer la traction de l'autre train (3) du véhicule,
**caractérisé en ce que** le couple (Cglob) demandé par le conducteur étant réparti initialement suivant une première répartition (r1) de couple entre le train avant (2) et le train arrière (3),
- plus la distance (D) parcourue sans activer une fonction (E) de régulation de freinage augmente, plus on modifie la répartition (R) du couple demandé pour aller de la première répartition (r1) de couple vers une deuxième répartition (r2) de couple dans laquelle le train (2) associé au moteur (7) thermique transmet plus de couple que dans la première répartition (r1).

2. Procédé selon la revendication 1, **caractérisé en ce que** la première répartition (r1) de couple est une répartition optimale en termes de motricité observable lorsque la distance parcourue (D) sans activation d'une fonction de régulation de freinage est nulle.

3. Procédé selon la revendication 2, **caractérisé en ce que** dans la répartition (r1) de couple optimale :
- le couple appliqué sur le train (2) associé au moteur (7) thermique est compris entre 40 et 70% du couple demandé (Cglob), de préférence 60%, et
- le couple appliqué sur l'autre train (3) est compris entre 10 et 60% du couple demandé, de préférence 40%,
- la somme en pourcents de ces portions du couple global (Cglob) valant 100%.

4. Procédé selon l'une des revendications 1 à 3, **caractérisé en ce que** la deuxième répartition (r2) de couple est une répartition dite « dégradée » en termes de motricité dans laquelle l'ensemble du couple demandé (Cglob) est transmis par le train (2) associé au moteur (7) thermique.

5. Procédé selon la revendication 4, **caractérisé en ce que** dans un exemple la répartition de couple « dégradée » est atteinte lorsque le véhicule a parcouru 1500 mètres.

6. Procédé selon l'une des revendications 1 à 5, **caractérisé en ce que** on passe progressivement de la première répartition (r1) à la deuxième répartition (r2), en utilisant une cartographie établissant une correspondance entre la répartition (R) de couple à adopter en fonction de la distance (D) parcourue sans activation du système (25) de freinage.

7. Procédé selon l'une des revendications 1 à 6, **caractérisé en ce que** dès que on détecte le déclenchement d'une fonction de régulation de freinage (E=1), on repasse à la première répartition (r1) de couple.

8. Procédé selon la revendication 7, **caractérisé en ce que** le passage de la répartition (R) de couple en cours à la première répartition (r1) de couple est effectué suivant un gradient (G) paramétrable.

9. Procédé selon la revendication 8, **caractérisé en ce que** le gradient (G) vaut par exemple 20 pourcents par seconde.

## Patentansprüche

1. Verfahren zur Drehmomentverteilung zwischen dem Frontteil (2) und dem Heckteil (3) eines Hybridfahrzeugs (1), das Folgendes aufweist:
- einen Verbrennungsmotor (7), der dazu bestimmt ist, den Zug eines der Teile (2) des Fahrzeugs sicherzustellen,
- einen Heckelektromotor (15), der dazu bestimmt ist, den Zug des anderen Teils (3) des Fahrzeugs sicherzustellen,
**dadurch gekennzeichnet, dass** das von dem Fahrer verlangte Drehmoment (Cglob) ursprünglich gemäß einer ersten Drehmomentverteilung (r1) zwischen dem Frontteil (2) und dem Heckteil (3) verteilt wird,
- man, je mehr die Entfernung (D), die ohne Aktivieren einer Bremsegelfunktion (E) zurückgelegt wird, zunimmt, die Verteilung (R) des verlangten Drehmoments ändert, um von der ersten Drehmomentverteilung (r1) zu einer zweiten Drehmomentverteilung (r2), bei der der Teil (2), der mit dem Verbrennungsmotor (7) verbunden ist, mehr Drehmoment als bei der ersten Verteilung (r1) überträgt, zu gehen.

2. Verfahren nach Anspruch 1, **dadurch gekennzeichnet, dass** die erste Drehmomentverteilung (r1) eine optimale Verteilung hinsichtlich der Antriebskraft ist, die beobachtet werden kann, wenn die Entfernung (D), die ohne Aktivieren einer Bremsregelfunktion zurückgelegt wird, gleich null ist.

3. Verfahren nach Anspruch 2, **dadurch gekennzeichnet, dass** bei der optimalen Drehmomentverteilung (r1):
- das Drehmoment, das an den Teil (2), der mit dem Verbrennungsmotor (7) verbunden ist, angelegt wird, zwischen 40 und 70 % des verlangten Drehmoments (Cglob), vorzugsweise 60 % beträgt, und
- das Drehmoment, das an den anderen Teil (3) angelegt wird, zwischen 10 und 60 % des verlangten Drehmoments, vorzugsweise 40 % beträgt,
- die Summe in Prozent dieser Anteile des Gesamtdrehmoments (Cglob) 100 % entspricht.

4. Verfahren nach einem der Ansprüche 1 bis 3, **dadurch gekennzeichnet, dass** die zweite Drehmomentverteilung (r2) eine so genannte hinsichtlich der Antriebskraft, bei der das gesamte verlangte Drehmoment (Cglob) von dem Teil (2), der mit dem Verbrennungsmotor (7) verbunden ist, übertragen wird, "verschlechterte" Verteilung ist.

5. Verfahren nach Anspruch 4, **dadurch gekennzeichnet, dass** bei einem Beispiel die "verschlechterte" Drehmomentverteilung erreicht ist, wenn das Fahrzeug 1500 Meter zurückgelegt hat.

6. Verfahren nach einem der Ansprüche 1 bis 5, **dadurch gekennzeichnet, dass** man allmählich von der ersten Verteilung (r1) zu der zweiten Verteilung (r2) übergeht, indem man eine Kartographie verwendet, die eine Entsprechung zwischen der Drehmomentverteilung (R), die in Abhängigkeit von der Entfernung (D), die ohne Aktivieren des Bremssystems (25) zurückgelegt wird, anzunehmen ist, erstellt.

7. Verfahren nach einem der Ansprüche 1 bis 6, **dadurch gekennzeichnet, dass** man, sobald man das Auslösen einer Bremsregelfunktion (E=1) erfasst, zu der ersten Drehmomentverteilung (r1) zurückkehrt.

8. Verfahren nach Anspruch 7, **dadurch gekennzeichnet, dass** der Übergang von der aktuellen Drehmomentverteilung (R) zu der der ersten Drehmomentverteilung (r1) gemäß einem parametrierbaren Gefälle (G) ausgeführt wird.

9. Verfahren nach Anspruch 8, **dadurch gekennzeichnet, dass** das Gefälle (G) zum Beispiel 20 Prozent pro Sekunde beträgt.

## Claims

1. A method for distributing torque between the front end (2) and the rear end (3) of a hybrid vehicle (1) including:
- a heat engine (7) intended to carry out the traction of one of the ends (2) of the vehicle,
- a rear electric machine (15) intended to carry out the traction of the other end (3) of the vehicle,
**characterized in that** the torque (Cglob) requested by the driver being distributed initially according to a first torque distribution (r1) between the front end (2) and the rear end (3),
- the greater the distance (D) travelled without activating a brake control function (E), the more the distribution (R) of the requested torque is modified to move from the first torque distribution (r1) to a second torque distribution (r2), in which the end (2) associated with the heat engine (7) transmits more torque than in the first distribution (r1).

2. The method according to Claim 1, **characterized in that** the first torque distribution (r1) is an optimum distribution in terms of observable motivity when the travelled distance (D) without activation of a brake control function is zero.

3. The method according to Claim 2, **characterized in that** in the optimum torque distribution (r1):
- the torque applied on the end (2) associated with the heat engine (7) is comprised between 40 and 70% of the requested torque (Cglob), preferably 60%, and
- the torque applied on the other end (3) is comprised between 10 and 60% of the requested torque, preferably 40%,
- the sum in percent of these portions of the overall torque (Cglob) being equal to 100%.

4. The method according to one of Claims 1 to 3, **characterized in that** the second torque distribution (r2) is a distribution designated as "degraded" in terms of motivity, in which the whole of the requested torque (Cglob) is transmitted by the end (2) associated with the heat engine (7).

5. The method according to Claim 4, **characterized in that** in an example the "degraded" torque distribution is reached when the vehicle has travelled 1500 metres.

6. The method according to one of Claims 1 to 5, **characterized in that** one passes progressively from the first distribution (r1) to the second distribution (r2) by using a mapping establishing a correspondence between the torque distribution (R) to be adopted as a function of the distance (D) travelled without activation of the brake system (25).

7. The method according to one of Claims 1 to 6, **characterized in that** as soon as the triggering is detected of a brake control function (E=1), one returns to the first torque distribution (r1)

8. The method according to Claim 7, **characterized in that** the passage of the torque distribution (R) in progress to the first torque distribution (r1) is carried out according to a parameterable gradient (G).

9. The method according to Claim 8, **characterized in that** the gradient (G) equals for example 20 percent per second.
